# EUROPEAN PATENT SPECIFICATION

(11) **EP 4 363 144 B1**
(45) Date of publication and mention of the grant of the patent: **20.08.2025**
(21) Application number: 22740993.5
(22) Date of filing: 28.06.2022
(51) Int. Cl.: B23C 5/10, B23C 5/28

(54) **TOOL FOR MILLING METAL ARTEFACTS OR HARD MATERIALS AND METHOD FOR THE PRODUCTION THEREOF**
WERKZEUG ZUM FRÄSEN VON METALLKÖRPERN ODER HARTEN MATERIALIEN UND VERFAHREN ZU DESSEN HERSTELLUNG
OUTIL DE FRAISAGE D'OBJETS MÉTALLIQUES OU DE MATÉRIAUX DURS ET PROCÉDÉ DE PRODUCTION ASSOCIÉ

(30) Priority: 02.07.2021 IT 202100017561; 26.11.2021 IT 202100029990
(43) Date of publication of application: 08.05.2024
(73) Proprietor: Cerin S.p.A., 37010 Affi (VR) (IT)
(72) Inventor: CUSCOV, Ivan, 37010 Affi (Verona) (IT)
(74) Representative: Sandri, Sandro
(86) International application number: PCT/IB2022/055973
(87) International publication number: WO 2023/275727

(56) References cited:
- WO-A1-2020/218556
- DE-A1- 102012 001 732
- DE-U1- 202015 106 360
- US-A1- 2021 086 275

## Description

### FIELD OF APPLICATION

The present invention relates to a tool for milling products in hard materials, in particular tools of the "T" type for milling metal materials, and a method for its production.

In particular, the present invention intends to solve some problems inherent to the limits of integral "T" tools or even those made in several assembled parts, since it is envisaged that said tool is made by combining a tool body made of cheap metal material, since the hardness of the metal is not necessary in this portion, and a head made of material of high quality and hardness, and that the tool thus made comprises suitable channels for the passage of cooling water delivered through the head, ultimately obtaining an extremely performing and cost-effective tool.

The present invention is advantageously applied in the field of milling tools, in particular tools of the "T" type, used for machining materials and in particular for creating grooves on workpiece holder tables or the like.

### PRIOR ART

As disclosed in DE202015106360U1, WO2020/218556A1 and US2021/086275A1, the use of various types of tools which are generally applied on machines for milling or turning products is known.

The tools allow milling or turning operations of products and in some cases there are special tools adapted to make so-called "T-slots", or slots made along parallel longitudinal lines within products such as workpiece holder tables or the like, or tables or base plates, movable or fixed, of many workstations on which the workpieces are fixed by vices.

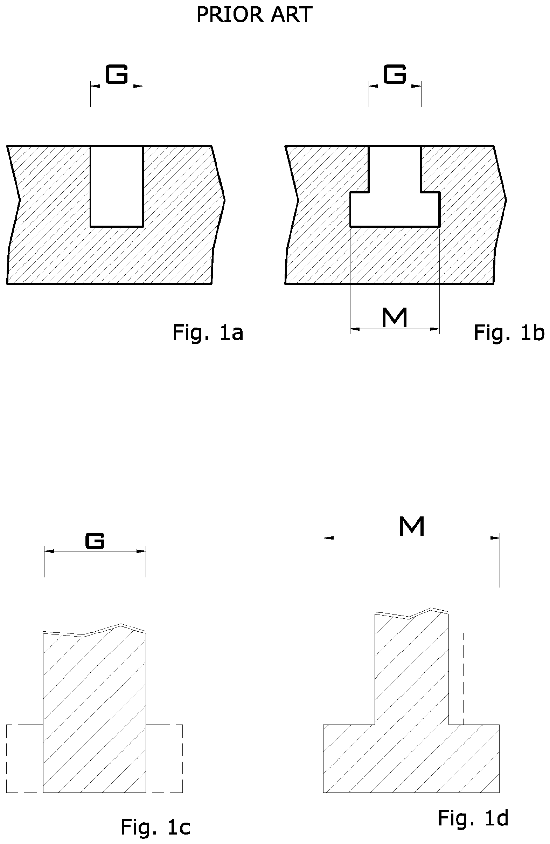

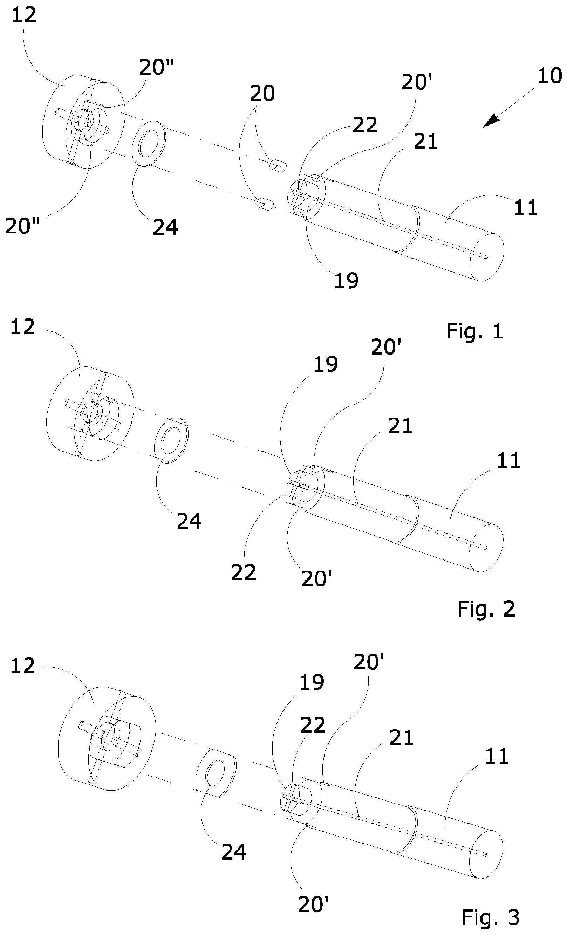

Therefore, typically, for a slot with the characteristic dimensions shown below, the sequence of operations, with reference to figures 1a, 1b, 1c, 1d, is as follows:
- Creation of a straight "corridor", or entry, with a first standard tool (figure 1c) or cylindrical cutter with a diameter ΦG equal to the entry of the slot, and a minimum length outside the clamp equal to the total depth of the corridor (figure 1a). The tool must cut the slot of the "corridor" for the desired longitudinal length.
- Creation of the final undercut profile of the slot using a second "T" shaped tool (figure 1d), with a diameter of the shank (or tang) smaller than ΦG (to avoid rubbing on the inner wall and risking breaking), a cutting diameter ΦM equal to the larger diameter of the slot and a minimum length outside the clamp equal to the total depth of the slot.

The problem encountered in actuating this technology is that of finding the best compromise between maximum cost reduction and the highest production efficiency.

Integral tools with a head of diam. ΦM and shank ΦG made in a single piece, all of the same material, if produced with low-cost material such as steel (or HSS) allow very slow machining with high cutting edge wear, while high-performance carbide (or cobalt alloy and tungsten carbide) tools have excellent performance but high costs.

Furthermore, the adoption of a single body for the head and shank requires the creation of a roughly shaped object in a single material, produced with high material removal and high machining costs. Therefore, to carry out quite simple operations which, however, require the creation of undercuts, it is possible to use tools which are either poor, as they are extremely cheap, or performant but very expensive.

All this requires considerable investments in the tools used or in the workmanship by the operators who must also replace any damaged tools, using prolonged execution times both during the machining of the tools and during the machining of the product to be treated, with all the considerable costs which derive therefrom.

In some cases, tools have been made by combining two or more products, for example flat hot-brazed cutting edges, which allow to obtain a body in different materials, but with strong limitations on the cutting geometry, mainly linked to the impossibility of performing a number of cutting edges and helix angles and cutting of any kind and shape, therefore made with an unsatisfactory technology for this specific type of product.

According to some solutions, a "T" type cutting element comprises a cutting head of cylindrical conformation having a cavity of substantially cylindrical conformation, an elongated shank coaxially aligned with the head with an annular space defined between the cavity of the cutting head and a portion of the shank extending therein, such cavity being filled by injection with molten metal.

This technology is not suitable for making grooves which envisage high material removals, since the joint between the head and the shank has a precarious tightness because the joining surfaces are reduced.

It has further been found that the "T" cutting tools known in the art are subject to rapid wear due to the severity of the machining, with a high removal of material in the execution of the "T" slots which subjects the tool to high mechanical and thermal stresses due to the friction between the cutting edges and the piece of hard material to be incised, with the production of high chip volumes.

The overheating of the tool represents a rather significant problem, as it affects the deterioration of the tool which can in a short time progressively lose the integrity of the cutting edges, with all the negative consequences which derive therefrom.

The possibility of bringing pressurised fluid in an optimal manner in the machining area, i.e., from inside the tool, is currently limited to integral tools or with hot-brazed cutting edges in the form of flat shaped plates (with the above limitations) while there are no known solutions applied to hot-brazed tools and internal supply of refrigerant with any number and geometry of cutting edges.

### DESCRIPTION OF THE INVENTION

The present invention aims to provide a tool for milling products in hard materials, such as metal or stone material, in particular tools of the "T" type in several assembled products, also comprising cooling means by lubricating-refrigerant fluid, i.e., capable of eliminating or at least reducing the drawbacks highlighted above.

The invention aims in particular to provide a tool of the "T" type for milling hard materials made in two parts with not necessarily the same materials and provided with channels for the passage of refrigerant liquid which is directly supplied into the machining area through the tool itself.

According to the invention, it is envisaged that the body or shank of the cutter, consisting of a substantially cylindrical shaft in which a coaxial inner channel is made connected to the end of the shank with a possible plurality of radially arranged grooves or holes, is inserted into at least one coaxial slot made on the inner side of a head provided with radial holes placed in alignment with said radially arranged holes of the shank. The hot-brazing between the shank and the head occurs after the interposition of hot-brazing material placed between the end of the shank and the bottom of the seat of the head, so that the channels for the refrigerant liquid are perfectly aligned.

This is obtained by means of a tool for milling products in hard material according to claim 1 and a manufacturing method thereof according to claim 7.

The dependent claims of the present solution outline advantageous embodiments of the invention.

The invention aims in particular to provide a tool of the "T" type for milling metal materials or the like which envisages creating a body, or shank, made of a generally different material with respect to the head, or in any case consisting of a separate product from the head and which must be assembled therewith by hot-brazing and which at the same time allows a flow of lubricating-refrigerant fluid inside the tool itself.

The presence of passages inside the tool for the passage of fluid and hot-brazed areas makes it necessary to design a specific head coupling area so that, during the hot-brazing, the filler material, once it has reached the liquid state, does not flow inside the inner passages, obstructing them after solidification.

### ILLUSTRATION OF THE DRAWINGS

Other features and advantages of the invention will become apparent from reading the following description of an embodiment of the invention provided by way of nonlimiting example, with the aid of the figures illustrated in the appended tables of drawings, in which:
- figures 1a to 1d illustrate schematic views of a traditional system for making longitudinal cavities with undercuts on workpiece holder tables or the like;
- figures 1, 2 and 3 depict schematic views highlighting three respective possible modes for joining a milling head to the shank thereof of a "T" tool provided with cooling channels according to the invention;
- figure 4 illustrates a schematic view referring to a first embodiment of the assembly between shank and head before their assembly;
- figure 4a illustrates a sectional view of the tool of fig. 4, with separate shank and head;
- figure 4b illustrates a sectional view of the tool of fig. 4, with the shank and head joined;
- figure 5 illustrates a schematic view referring to a second embodiment of the assembly between shank and head before their assembly;
- figure 5a illustrates a sectional view of the tool of figure 5, with separate shank and head;
- fig. 5b illustrates a sectional view of the tool of fig. 5, with the shank and head joined;
- figure 6 shows a perspective view of the assembled tool;
- figures 7, 7a and 7b are views respectively in perspective before assembly, in section after assembly and in detailed section of the end of the shank of the tool with holes in the slot in the retracted position;
- figures 8, 8a and 8b are views respectively in perspective before assembly, in section after assembly and in detailed section of the end of the shank of the tool with holes in the slot in the advanced position;
- figures 9, 9a and 9b depict schematic views, respectively exploded and assembled, highlighting an embodiment of the invention in which the shank is free of radial holes, and the lubricant-refrigerant fluid exits from a chamber obtained in the head-shank coupling area thanks to the shortening of the front section of the shank itself;
- figure 9c illustrates a sectional view of the tool according to fig. 9, with separate shank and head;
- figure 9d illustrates a sectional view of the tool according to fig. 9, with the shank and head joined.

### DESCRIPTION OF AN EMBODIMENT OF THE INVENTION

Referring to the appended figures, and initially in particular to figure 1, the reference numeral 10 generally indicates a tool for milling products in hard materials, such as metal or stone material, in particular a tool of the "T" type, consisting of a body or shank 11 and a cutting head 12.

In particular, the tool consists of a cylindrical or generally axial-symmetrical shank 11, and a head 12 which is initially rough with a substantially discoidal shape, where the head 12 and the shank 11 are of different materials, or in any case are initially separate objects. The initially rough head 12 becomes the sharp head, comprising the cutting edges, after the sharpening process.

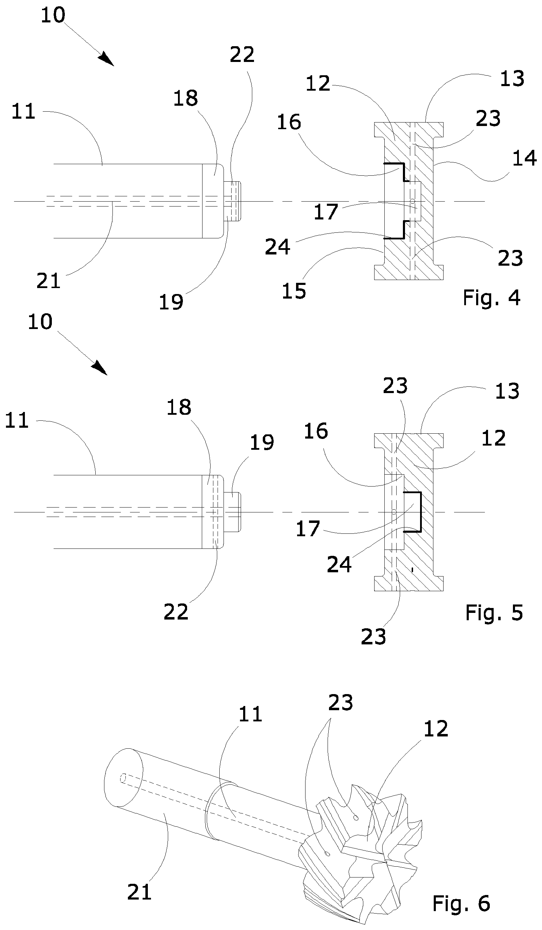

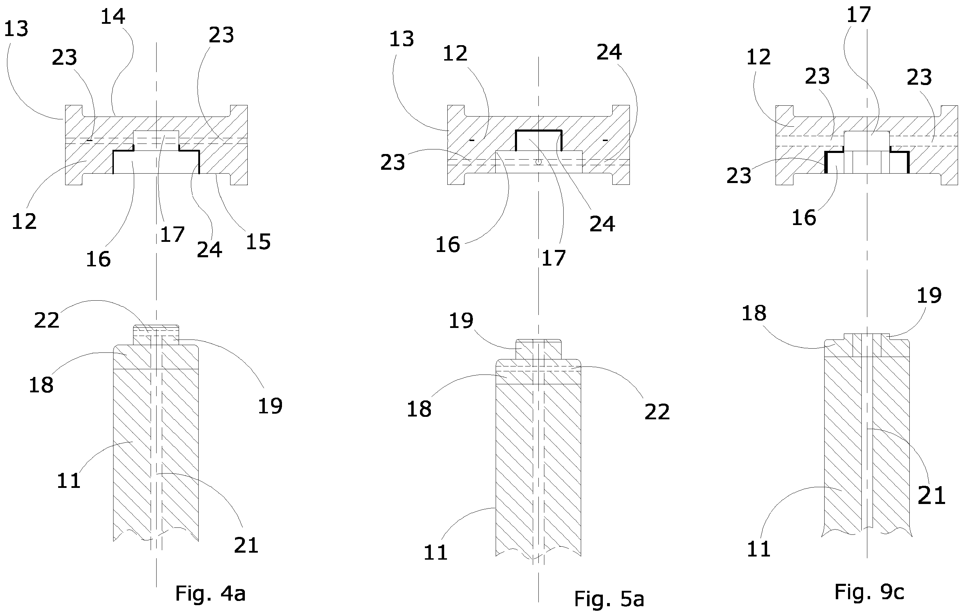

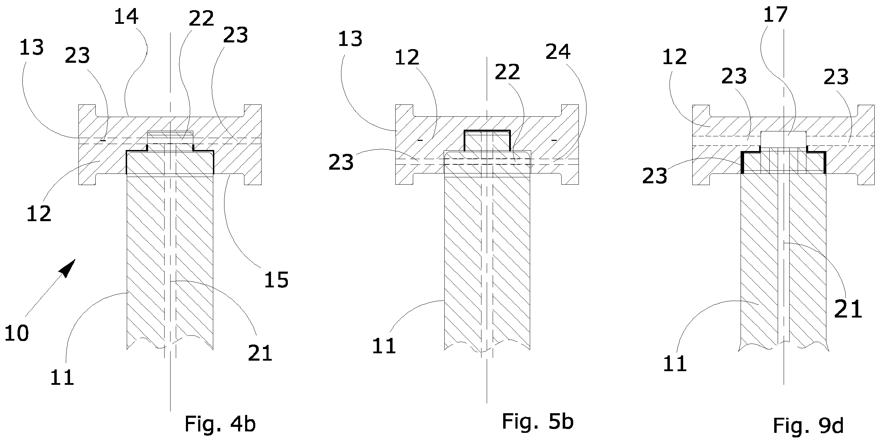

According to a first embodiment depicted in figure 4, the rough head 12, which in the images is depicted before the sharpening adapted to form the cutting edges, has a cylindrical edge 13 and two circular surfaces 14 and 15 which form two opposite faces, a front and a rear.

In the head 12, inside one of the two circular surfaces 14 and 15, a first substantially circular slot 16 is obtained, arranged with the main axis thereof parallel to the rotation axis of the tool.

In turn, inside the first slot 16 a second slot 17 is also obtained, also substantially circular, concentric and arranged coaxially to the main slot 16, where the second slot 17 is smaller than the first slot 16.

The shank 11, as illustrated in figure 4, comprises an end 18 from which an appendage 19 extends, where the end 18 and the appendage 19 are configured for their coupling with the head 12 at the slots 16 and 17, respectively, with the aim of adding, in addition to fixing by hot-brazing as we will see below, also a further mechanical fixing action obtained by coupling between sections, even non-circular, or possibly by interposing auxiliary fixing elements of circular or prismatic section, with any number of sides.

In this regard, the end 18 of the shank 11, adapted to couple with the head 12, has a section such as to fit precisely into the first slot 16 of the head 12, and the appendage 19 has a section such as to fit precisely into the corresponding slot 17 of the head 12 itself.

The shape of the slots 16 and 17, as well as the respective ends 18 and appendage 19 of the shank, are circular or prismatic with any number of sides, which can be flat, concave or convex.

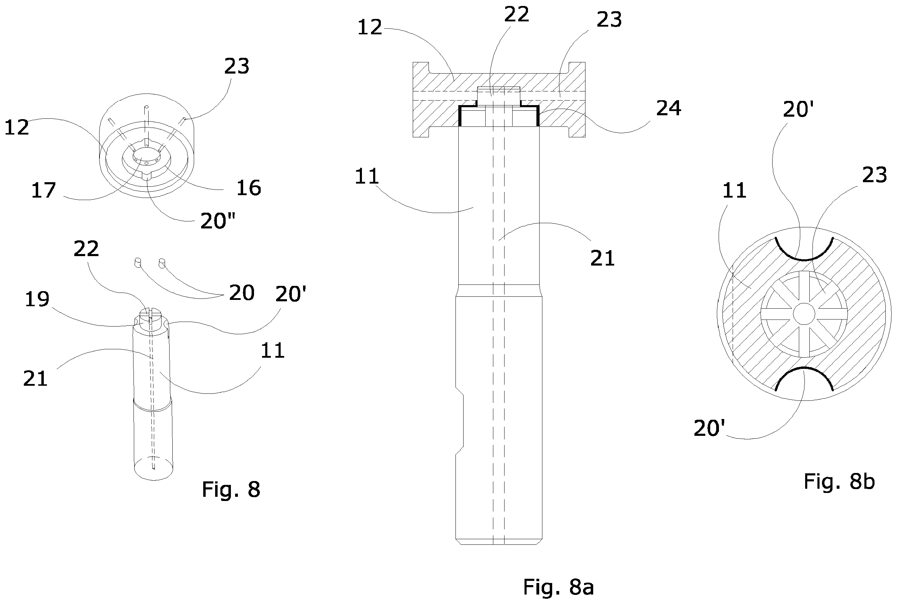

According to the embodiment depicted in figures 1 and 8, it is envisaged that both the end 18 and the appendage 19 of the shank 11 and the slots 16 and 17 of the head 12 are provided with anti-rotation recesses 20' and 20", respectively, to which fixing pins 20 are associated configured to prevent the relative rotation of the shank 11 and the head 12.

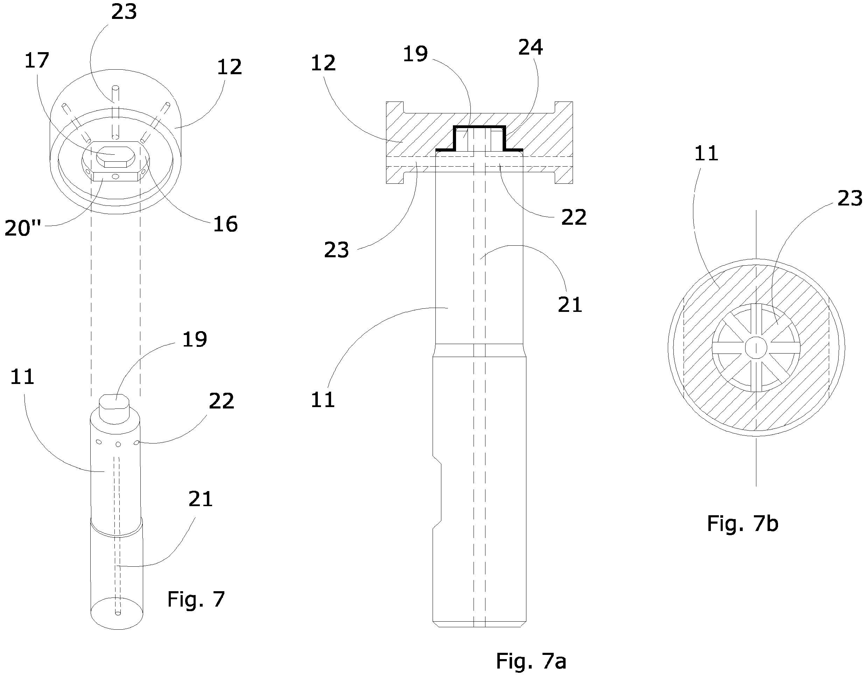

According to an embodiment of the invention, the shank 11, moreover, is provided with a central channel 21 parallel and coaxial to the outer cylindrical surface, and, in this embodiment, with radially arranged lateral holes 22, placed in a first case on the appendage 19 of the shank itself, as depicted in figures 4 and 8a and in a second case on the end 18 of the shank 11, as depicted in figures 5 and 7a.

According to a further embodiment, the shank 11 is provided with the central channel 21 parallel and coaxial to the outer cylindrical surface, but without radially arranged lateral holes 22, as we will see in detail below.

In turn, the head 12 is also provided with respective radially arranged holes 23 orthogonal with respect to the axis of the head itself, which coincides with the axis of the shank 11.

In a first case the radial holes 23, as depicted in figures 4 and 8a, are arranged starting from the cylindrical edge 13 of the head 12 to open internally at the annular edge of the second slot 17, while in a second case the radial holes 23, as depicted in figures 5 and 7a, are still arranged starting from the cylindrical edge 13 of the head 12 to open internally at the annular edge of said first slot 16. Where the holes 22 and 23 are made in an advanced position, as depicted in figures 1 to 3 and 8a, the holes 22 can be replaced by open front grooves placed on the end face of the appendage 19 of the shank 11.

The radial holes 23 made in the head 12 are placed in alignment with the radially arranged lateral holes 22 placed in a first case on the appendage 19 of the same shank and in a second case on the end 18 of the shank 11, so that the joint of the end of the shank 11 with the slots 16 and 17 of the head 12 causes the formation of a through connection for refrigerant fluid from the central channel 21 of the shank at the exit towards the outside of the radial holes 23, at the material machining area.

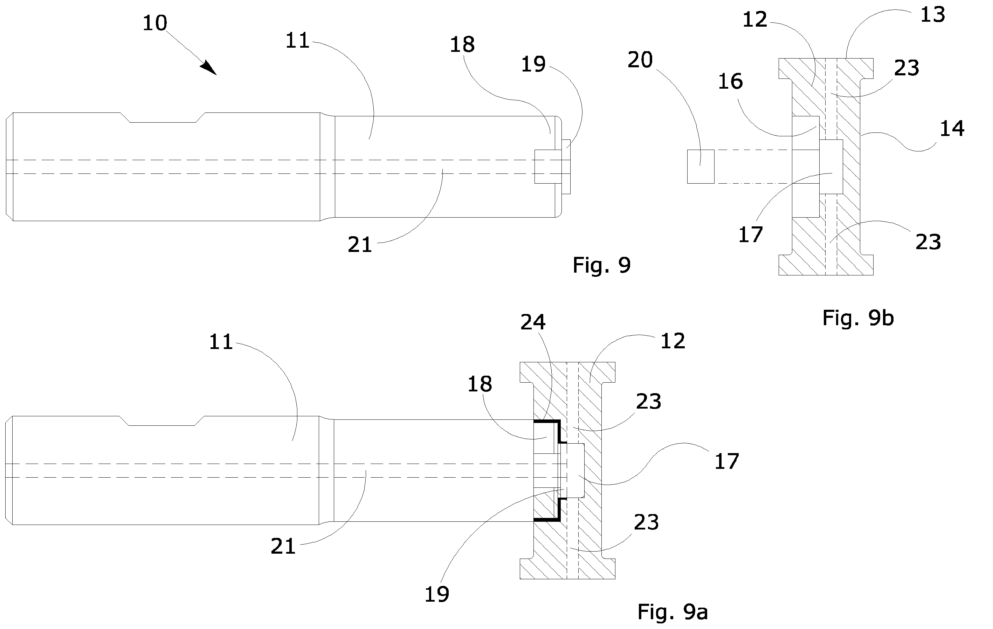

According to the embodiment depicted in figures 9, 9a and 9b, which envisages that the shank 11 is provided with the central channel 21 parallel and coaxial to the outer cylindrical surface, but without radially arranged lateral holes 22, the end 18 of the shank 11 penetrates into the first slot 16 while the appendage 19 is configured to penetrate only partially into the second slot 17, so as to allow the connection between the channel 21 of the refrigerant fluid, which opens at the centre of the appendage 19, and the radial holes 23 through the pre-chamber formed by the same slot 17 which is created between the end of the shank and the head.

The different embodiments of the tool are depicted in figures 4a, 5a and 9c illustrating sectional views of the tool according to the invention with the shank separated from the head, and in figures 4b, 5b and 9d illustrating sectional views of the tool according to the invention in its embodiments in joined mode with the shank inserted and fixed in the head.

From an operational point of view, it is envisaged that, for the fixing by hot-brazing of the end of the shank inside the slots 16 and 17, welding material 24 is used which is placed in the slots 16 or 17 based on the advanced or retracted positioning of the appendage 19 of the shank 11 or on the end 18 of the shank itself.

According to a first embodiment depicted in figures 4 and 8a, when the lateral holes 22 of the shank 11 are placed in an advanced position on the end of the appendage 19, and possibly on the front face of the same appendage 19, to coincide with the radial holes 23 placed at the second slot 17 of the head 12, the welding material 24 is placed on the bottom of the first slot 16, while when the lateral holes 22 are placed on the end 18 of the shank 11 to coincide with the radial holes 23 placed at the first slot 16, the welding material is placed on the bottom of the second slot 17.

The passages of any lateral holes 22, present only in some embodiments, and radial holes 23 are therefore configured to prevent the mutual connections from closing in the hot-brazing step, since the welding material could fill them with molten alloy which solidifying, would plug them. Therefore, it is necessary to envisage an axial misalignment, hence the two proposed sections, which ultimately allow to keep the passages from the alloy "distanced".

The mechanical coupling between the head and the shank is configured to confer both the maximum strength to the brazed joint and to ensure the radial alignment of the passages.

Such combinations of shank and head configuration allow the permanent passage of internal lubricant-refrigerant fluid near the area subject to hot-brazing.

The final sharpening of the tool, occurring starting from a rough head 12 of cylindrical shape, allows to obtain any cutting geometry, in particular any number of cutting edges and values of helix angles and cutting angles, as in the example depiction of figure 6.

It should be noted that, according to a preferred embodiment, all the holes and/or the inner cooling passages are made before the brazing, both on the shank and on the head; therefore, after brazing the tool is ready for sharpening.

Depending on whether the holes are on the end 18 or on the appendage 19, the shape of the brazing area or the gap which the alloy must fill changes. The correct choice of coupling tolerances must ensure that the alloy fills all and only the areas to be filled.

The mechanical coupling (regardless of the section) can be made by means of not totally circular sections (therefore with some flat faces) or with the insertion of fixing pins 20, as depicted in figure 8. For these pins 20, special housings 20' are arranged placed on the head and shank, or enlargements/narrowings of the circular sections of the same shape as the pins (which will be cylindrical or prismatic with any number of sides).

In the case of a particular shape of the head, these narrowings could also be incorporated into the shape of the slots 16 and 17, as depicted in figure 2, thus making the use of additional pins unnecessary in such a case.

As depicted in figure 1, the joining between the body or shank 11 of the tool and the cutting head 12 of a milling tool of the "T" type, occurs by inserting welding material 24 in the slots 16 and/or 17, and subsequently also inserting the end 18 and the appendage 19 of the shank 11 in the same slots 16 and 17 of the head 12.

During the melting, the welding material 24, initially resting on the bottom of at least one of the slots 16 or 17, also fills the entire "gap" between the shank and the slots, creating a very large and solid tightness surface.

According to the embodiment depicted in figure 4 or 5, the sealing area made by brazing the welding material 24 is highlighted.

The depth of insertion of the end 18 and the appendage 19 into the slots 16 and 17 is calculated in relation to the diameter of the channel itself.

For example, by way of illustration, the ratio between the insertion depth and the diameter of the shank is greater than or equal to 0.1, or 10%.

The shank can however have, in areas not affected by the joining with the head 12 in the slots 16 and 17, even different diameters.

The steps which, according to the invention, allow to obtain the milling tool are defined in claim 7.

As mentioned, the joint between the two materials forming the shank 11 and the head 12 of the tool 10 allows the maximum reliability and performance of the tool and at the same time a reduction in the production and consequent marketing costs, making the tool potentially very attractive on the market.

The invention has been described in the foregoing with reference to a preferential embodiment thereof.

## Claims

1. A tool (10) of the "T" type used for milling metal products or other hard materials, such as for making grooves with undercuts on a workpiece holder or the like, said tool comprising:
- a substantially axially symmetric shank (11) comprising an end (18) thereof provided with an appendage (19);
- a head (12) separated from said shank (11) and joinable therewith, of substantially cylindrical or trunco-conical discoidal conformation having a greater diameter than said shank (11) and delimited by two opposite faces (14, 15) of which the face (15) facing said shank (11) comprises a first slot (16), arranged with the main axis thereof parallel to the rotation axis of the tool, inside which a second slot (17) which is concentric and arranged coaxially to the main slot (16) is also obtained, where the second slot (17) is smaller than the first slot (16);
wherein said shank (11) is provided with at least one central longitudinal channel (21), and in that said head (12) is provided with holes (23) arranged radially and communicating with said central channel (21), so that the mutual connection between the shank (11) and the head (12) causes a passage of refrigerant fluid introduced from the base of the shank and delivered by the radial holes (23) of the head (12); **characterised in that** the end (18) of the shank (11) and/or its appendage (19) are provided with radially arranged lateral holes and/or grooves (22) placed in connection with the radial holes (23) of the head (12);
wherein the end (18) of the shank (11) is fixed to the inside of the slots (16, 17) by welding material (24) which is placed in the slots (16, 17) based on the positioning of the lateral holes and/or grooves (22) on the end of the appendage (19) of the shank (11) or on the end (18) of the shank itself;
wherein, when the lateral holes (22) of the shank (11) are placed in an advanced position on the end of the appendage (19) to coincide with the radial holes (23) placed at the second slot (17) of the head (12), the welding material (24) is placed on the bottom of the first slot (16);
and wherein, when the lateral holes (22) are placed on the end (18) of the shank (11) to coincide with the radial holes (23) placed at the first slot (16), the welding material is placed on the bottom of the second slot (17).

2. The tool (10) according to claim 1, **characterised in that** said radial holes (23) are arranged starting from an edge (13) of the head (12) to open internally at an annular edge of the second slot (17) or at the annular edge of said first slot (16).

3. The tool (10) according to claim 1 o 2, **characterised in that** said radial holes (23) made in the head (12) are placed in alignment with said radially arranged lateral holes and/or grooves (22) placed on the appendage (19) of the same shank and/or on the end (18) of the shank (11), or configured so that the joint of the end of the shank (11) with the slots (16, 17) of the head (12) causes the formation of a through connection for refrigerant fluid from the central channel (21) of the shank at the exit towards the outside of the radial holes (23), at the material machining area.

4. The tool (10) of the "T" type according to one of the preceding claims, **characterised in that** the shank (11) is provided with at least one central channel (21) of the head (12) configured so that the end (18) of the shank (11) penetrates into said first slot (16) while the appendage (19) partially penetrates into said second slot (17) so as to allow the direct connection between the channel (21) of the refrigerant fluid, which opens into the centre of the appendage (19), with the radial holes (23), where said second slot (17) forms a pre-chamber which connects the central channel (21) opening from the appendage (19) of the shank with the bottom of the slot (17).

5. The tool (10) according to one of the preceding claims, **characterised in that** both the ends (18) and the appendage (19) of the shank (11) and the slots (16, 17) of the head (12) are configured so that the mutual joint thereof causes an anti-rotation type fixing.

6. The tool (10) according to one of the preceding claims, **characterised in that** the mutual anti-rotation joint between the ends (18) with the appendage (19) of the shank (11) and the slots (16, 17) of the head (12) is obtained by using recesses (20', 20") and respective anti-rotation projections or pins (20) configured to prevent the relative rotation between the shank (11) and the head (12) and allow the alignment between the possible radial holes (23) made in the head (12) and the radially arranged lateral holes (22) placed on the appendage (19).

7. A process for creating a tool (10) of the **"T"** type, the process comprising the following subsequent steps:
a) creating a body or shank (11) of approximately cylindrical or prismatic conformation having predefined dimensions provided with at least one through channel (21) and an appendage (19);
b) creating a head (12) separated from said body or shank (11), of substantially cylindrical or conical, trunco-conical or similar conformation and with a greater diameter than that of the body or shank (11), said head (12) comprising a first substantially circular slot (16), arranged with the main axis thereof parallel to the rotation axis of the tool, inside which a second slot (17) is also obtained, also substantially circular, concentric and arranged coaxially to the main slot (16), where the second slot (17) is of smaller dimensions than the first slot (16), said head being provided with respective holes (23) arranged in a radial direction starting from the cylindrical edge (13) of the head (12) to open internally at the annular edge of the second slot (17), or the annular edge of said first slot (16);
c) placing welding material (24) inside at least one of the slots (16, 17) of the head (12);
d) introducing the end (18) and the appendage (19) of the shank (11) into the slots (16, 17) of the head (12) in which the welding material (24) is inserted so that the radial holes (23) made in the head (12) are placed in connection with said channel (21) of the shank (11);
e) hot-brazing between the shank (11) and the head (12) for the creation of the joint;
**characterised in that** a series of radially arranged lateral holes and/or grooves (22) are made on the body or shank (11) and **in that** said lateral holes and/or grooves (22) are placed in alignment with the radial holes (23) made in the head (12);
wherein the end (18) of the shank (11) and/or its appendage (19) are provided with radially arranged lateral holes and/or grooves (22) placed in connection with the radial holes (23) of the head (12);
wherein the end (18) of the shank (11) is fixed to the inside of the slots (16, 17) by welding material (24) which is placed in the slots (16, 17) based on the positioning of the lateral holes and/or grooves (22) on the end of the appendage (19) of the shank (11) or on the end (18) of the shank itself;
wherein, when the lateral holes (22) of the shank (11) are placed in an advanced position on the end of the appendage (19) to coincide with the radial holes (23) placed at the second slot (17) of the head (12), the welding material (24) is placed on the bottom of the first slot (16);
and wherein, when the lateral holes (22) are placed on the end (18) of the shank (11) to coincide with the radial holes (23) placed at the first slot (16), the welding material is placed on the bottom of the second slot (17).

8. The process according to claim 7, **characterised in that** said head (12) is subjected to material removal to create cutting edges.

## Patentansprüche

1. Werkzeug (10) vom "T"-Typ, das zum Fräsen von Metallprodukten oder sonstigen harten Materialien wie zum Beispiel zum Ausbilden von Nuten mit Hinterschneidungen auf einem Werkstückhalter oder dergleichen genutzt wird, wobei das Werkzeug Folgendes umfasst:
- einen im Wesentlichen axialsymmetrischen Schenkel (11), umfassend ein Ende (18), das mit einem Fortsatz (19) versehen ist;
- einen Kopf (12) einer im Wesentlichen zylindrischen oder stumpfkegel-scheibenförmigen Ausgestaltung, der getrennt vom Schenkel (11) angeordnet und mit diesem zusammenfügbar ist, aufweisend einen größeren Durchmesser als der Schenkel (11) und begrenzt durch zwei gegenständige Seitenflächen (14, 15), von denen die Seitenfläche (15), die dem Schenkel (11) zugewandt ist, eine erste Aussparung (16) umfasst, die so angeordnet ist, dass ihre Hauptachse parallel zur Rotationsachse des Werkzeugs verläuft, in der ebenfalls eine zweite Aussparung (17), die konzentrisch verläuft und koaxial zur Hauptachse (16) angeordnet ist, ausgebildet ist, wobei die zweite Aussparung (17) kleiner ist als die erste Aussparung (16),
wobei der Schenkel (11) mit mindestens einem mittigen Längskanal (21) versehen ist und der Kopf (12) mit Löchern (23) versehen ist, die radial angeordnet sind und mit dem mittigen Kanal (21) kommunizieren, sodass die gegenseitige Verbindung zwischen dem Schenkel (11) und dem Kopf (12) ein Durchlaufen eines Kältemittels, das von der Basis des Schenkels eingeführt und durch die radialen Löcher (23) des Kopfs (12) zugeführt wird, herbeiführt, **dadurch gekennzeichnet, dass** das Ende (18) des Schenkels (11) und/oder dessen Fortsatz (19) mit radial angeordneten seitlichen Löchern und/oder Nuten (22) versehen sind, die in Verbindung mit den radialen Löchern (23) des Kopfs (12) platziert sind,
wobei das Ende (18) des Schenkels (11) an der Innenseite der Aussparungen (16, 17) mittels Schweißmaterial (24) befestigt ist, das in den Aussparungen (16, 17) platziert ist, basierend auf dem Positionieren der seitlichen Löcher und/oder Nuten (22) auf dem Ende des Fortsatzes (19) des Schenkels (11) oder auf dem Ende (18) des Schenkels selbst,
wobei das Schweißmaterial (24) auf dem Boden der ersten Aussparung (16) platziert ist, wenn die seitlichen Löcher (22) des Schenkels (11) in einer vorgeschobenen Position auf dem Ende des Fortsatzes (19) platziert sind, um mit den radialen Löchern (23) übereinzustimmen, die an der zweiten Aussparung (17) des Kopfs (12) platziert sind,
und wobei das Schweißmaterial auf dem Boden der zweiten Aussparung (17) platziert ist, wenn die seitlichen Löcher (22) auf dem Ende (18) des Schenkels (11) platziert sind, um mit den radialen Löchern (23) übereinzustimmen, die an der ersten Aussparung (16) platziert sind.

2. Werkzeug (10) nach Anspruch 1, **dadurch gekennzeichnet, dass** die radialen Löcher (23) ausgehend von einer Kante (13) des Kopfs (12) angeordnet sind, um sich intern an einer ringförmigen Kante der zweiten Aussparung (17) oder an der ringförmigen Kante der ersten Aussparung (16) zu öffnen.

3. Werkzeug (10) nach Anspruch 1 oder 2, **dadurch gekennzeichnet, dass** die im Kopf (12) ausgebildeten radialen Löcher (23) fluchtend zu den radial angeordneten seitlichen Löchern und/oder Nuten (22), die auf dem Fortsatz (19) desselben Schenkels und/oder auf dem Ende (18) des Schenkels (11) platziert sind, platziert oder derart ausgelegt sind, dass die Zusammenfügung des unteren Endes des Schenkels (11) mit den Aussparungen (16, 17) des Kopfs (12) die Bildung einer Durchführungsverbindung für Kältemittel vom mittigen Kanal (21) des Schenkels am Austritt hinführend zur Außenseite der radialen Löcher (23) am Materialbearbeitungsbereich bewirkt.

4. Werkzeug (10) vom "T"-Typ nach einem der vorhergehenden Ansprüche, **dadurch gekennzeichnet, dass** der Schenkel (11) mit mindestens einem mittigen Kanal (21) des Kopfs (12) versehen ist, so ausgelegt, dass das Ende (18) des Schenkels (11) in die erste Aussparung (16) eindringt, während der Fortsatz (19) teilweise in die zweite Aussparung (17) eindringt, sodass die direkte Verbindung zwischen dem Kanal (21) des Kältemittels, der sich in die Mitte des Fortsatzes (19) öffnet, mit den radialen Löchern (23) erlaubt wird, wobei die zweite Aussparung (17) eine Vorkammer bildet, die die Öffnung des mittigen Kanals (21) vom Fortsatz (19) des Schenkels mit dem Boden der Aussparung (17) verbindet.

5. Werkzeug (10) nach einem der vorhergehenden Ansprüche, **dadurch gekennzeichnet, dass** sowohl die Enden (18) als auch der Fortsatz (19) des Schenkels (11) und die Aussparungen (16, 17) des Kopfs (12) so ausgelegt sind, dass deren gegenseitige Zusammenfügung eine Befestigung vom Drehsicherungstyp bewirkt.

6. Werkzeug (10) nach einem der vorhergehenden Ansprüche, **dadurch gekennzeichnet, dass** die gegenseitige Drehsicherungszusammenfügung zwischen den Enden (18) mit dem Fortsatz (19) des Schenkels (11) und den Aussparungen (16, 17) des Kopfs (12) erhalten wird, indem Ausnehmungen (20', 20") und jeweilige Drehsicherungsvorsprünge oder -zapfen (20) genutzt werden, die ausgelegt sind, um die relative Drehung zwischen dem Schenkel (11) und dem Kopf (12) zu vermeiden und die Fluchtung zwischen den möglichen radialen Löchern (23), die im Kopf (12) ausgebildet sind, und den radial angeordneten seitlichen Löchern (22), die auf dem Fortsatz (19) platziert sind, zu erlauben.

7. Verfahren zur Fertigung eines Werkzeugs (10) vom "T"-Typ, wobei das Verfahren die folgenden aufeinanderfolgenden Schritte umfasst:
a) Fertigen eines Körpers oder Schenkels (11) mit einer ungefähren zylindrischen oder prismatischen Ausgestaltung, aufweisend vordefinierte Abmessungen, versehen mit mindestens einem Durchführungskanal (21) und einem Fortsatz (19);
b) Fertigen eines Kopfs (12), der vom Körper oder Schenkel (11) getrennt angeordnet ist, mit einer im Wesentlichen zylindrischen oder konischen, stumpfkegelförmigen oder ähnlichen Ausgestaltung und mit einem größeren Durchmesser als dem des Körpers oder Schenkels (11), wobei der Kopf (12) eine erste im Wesentlichen kreisförmige Aussparung (16) umfasst, die so angeordnet ist, dass ihre Hauptachse parallel zur Rotationsachse des Werkzeugs verläuft, innerhalb dessen ebenfalls eine zweite Aussparung (17) ausgebildet ist, die ebenfalls im Wesentlichen kreisförmig, konzentrisch und koaxial zur Hauptaussparung (16) angeordnet ist, wobei die zweite Aussparung (17) kleinere Abmessungen als die erste Aussparung (16) aufweist, wobei der Kopf mit jeweiligen Löchern (23) versehen ist, die in einer radialen Richtung ausgehend von der zylindrischen Kante (13) des Kopfs (12) angeordnet sind, um sich innenseitig an der ringförmigen Kante der zweiten Aussparung (17) oder der ringförmigen Kante der ersten Aussparung (16) zu öffnen;
c) Platzieren von Schweißmaterial (24) in mindestens einer der Aussparungen (16, 17) des Kopfs (12);
d) Einführen des Endes (18) und des Fortsatzes (19) des Schenkels (11) in die Aussparungen (16, 17) des Kopfs (12), in die das Schweißmaterial (24) eingefügt ist, sodass die radialen Löcher (23), die im Kopf (12) ausgebildet sind, in Verbindung mit dem Kanal (21) des Schenkels (11) platziert werden;
e) Hartlöten zwischen dem Schenkel (11) und dem Kopf (12) zur Fertigung der Zusammenfügung,
**dadurch gekennzeichnet, dass** eine Reihe radial angeordneter seitlicher Löcher und/oder Nuten (22) auf dem Körper oder Schenkel (11) ausgebildet ist und dadurch, dass diese seitlichen Löcher und/oder Nuten (22) fluchtend zu den radialen Löchern (23), die im Kopf (12) ausgebildet sind, platziert sind,
wobei das Ende (18) des Schenkels (11) und/oder dessen Fortsatz (19) mit radial angeordneten seitlichen Löchern und/oder Nuten (22) versehen sind, die in Verbindung mit den radialen Löchern (23) des Kopfs (12) platziert sind, wobei das Ende (18) des Schenkels (11) an der Innenseite der Aussparungen (16, 17) mittels Schweißmaterial (24) befestigt ist, das in den Aussparungen (16, 17) platziert ist, basierend auf dem Positionieren der seitlichen Löcher und/oder Nuten (22) auf dem Ende des Fortsatzes (19) des Schenkels (11) oder auf dem Ende (18) des Schenkels selbst,
wobei das Schweißmaterial (24) auf dem Boden der ersten Aussparung (16) platziert ist, wenn die seitlichen Löcher (22) des Schenkels (11) in einer vorgeschobenen Position auf dem Ende des Fortsatzes (19) platziert sind, um mit den radialen Löchern (23) übereinzustimmen, die an der zweiten Aussparung (17) des Kopfs (12) platziert sind,
und wobei das Schweißmaterial auf dem Boden der zweiten Aussparung (17) platziert ist, wenn die seitlichen Löcher (22) auf dem Ende (18) des Schenkels (11) platziert sind, um mit den radialen Löchern (23) übereinzustimmen, die an der ersten Aussparung (16) platziert sind.

8. Verfahren nach Anspruch 7, **dadurch gekennzeichnet, dass** der Kopf (12) der Materialabtragung unterliegt, um Schneidkanten zu fertigen.

## Revendications

1. Outil (10) du type en « T » utilisé pour le fraisage des produits métalliques ou d'autres matériaux durs, tels que pour réaliser des rainures avec des contre-dépouilles sur un porte-pièce ou similaire, ledit outil comprenant :
- une tige (11) substantiellement symétrique axialement comprenant une extrémité (18) munie d'un appendice (19) ;
- une tête (12) séparée de ladite tige (11) et pouvant être jointe à celle-ci, de conformation discoïdale substantiellement cylindrique ou tronconique ayant un diamètre supérieur à celui de ladite tige (11) et délimitée par deux faces opposées (14, 15) dont la face (15) faisant face à ladite tige (11) comprend une première fente (16), disposée avec son axe principal parallèle à l'axe de rotation de l'outil, à l'intérieur de laquelle est également obtenue une seconde fente (17) concentrique et disposée coaxialement à la fente principale (16), la seconde fente (17) étant plus petite que la première fente (16) ;
dans lequel ladite tige (11) est pourvue d'au moins un canal longitudinal central (21), et ladite tête (12) est pourvue de trous (23) disposés radialement et communiquant avec ledit canal central (21), de sorte que la liaison mutuelle entre la tige (11) et la tête (12) provoque un passage de liquide réfrigérant introduit depuis la base de la tige et délivré par les trous radiaux (23) de la tête (12) ; **caractérisé en ce que** l'extrémité (18) de la tige (11) et/ou son appendice (19) sont pourvus de trous latéraux et/ou de rainures (22) disposés radialement et placés en liaison avec les trous radiaux (23) de la tête (12) ;
dans lequel l'extrémité (18) de la tige (11) est fixée à l'intérieur des fentes (16, 17) au moyen d'un matériau de soudage (24) qui est disposé dans les fentes (16, 17) en fonction du positionnement des trous latéraux et/ou des rainures (22) situés à l'extrémité de l'appendice (19) de la tige (11) ou à l'extrémité (18) de la tige elle-même ;
dans lequel, lorsque les trous latéraux (22) de la tige (11) sont placés dans une position avancée sur l'extrémité de l'appendice (19) pour coïncider avec les trous radiaux (23) placés au niveau de la seconde fente (17) de la tête (12), le matériau de soudage (24) est placé sur le fond de la première fente (16) ;
et dans lequel, lorsque les trous latéraux (22) sont placés sur l'extrémité (18) de la tige (11) pour coïncider avec les trous radiaux (23) placés au niveau de la première fente (16), le matériau de soudage est placé sur le fond de la seconde fente (17).

2. Outil (10) selon la revendication 1, **caractérisé en ce que** lesdits trous radiaux (23) sont disposés à partir d'un bord (13) de la tête (12) pour s'ouvrir intérieurement au niveau d'un bord annulaire de la seconde fente (17) ou au niveau du bord annulaire de ladite première fente (16).

3. Outil (10) selon la revendication 1 ou 2, **caractérisé en ce que** lesdits trous radiaux (23) réalisés dans la tête (12) sont placés en alignement avec lesdits trous et/ou rainures latéraux disposés radialement (22) placés sur l'appendice (19) de la même tige et/ou sur l'extrémité (18) de la tige (11), ou configurés de sorte que le joint de l'extrémité de la tige (11) avec les fentes (16, 17) de la tête (12) provoque la formation d'une liaison traversante pour le liquide réfrigérant depuis le canal central (21) de la tige à la sortie vers l'extérieur des trous radiaux (23), au niveau de la zone d'usinage du matériel.

4. Outil (10) du type en « T » selon l'une des revendications précédentes, **caractérisé en ce que** la tige (11) est pourvue d'au moins un canal central (21) de la tête (12) configuré de sorte que l'extrémité (18) de la tige (11) pénètre dans ladite première fente (16) tandis que l'appendice (19) pénètre partiellement dans ladite seconde fente (17) de manière à permettre la liaison directe entre le canal (21) du liquide réfrigérant, qui s'ouvre dans le centre de l'appendice (19), avec les trous radiaux (23), où ladite seconde fente (17) forme une préchambre qui relie le canal central (21) s'ouvrant à partir de l'appendice (19) de la tige avec le fond de la fente (17).

5. Outil (10) selon l'une des revendications précédentes, **caractérisé en ce que** les extrémités (18) et l'appendice (19) de la tige (11) et les fentes (16, 17) de la tête (12) sont configurés de sorte que leur joint mutuel provoque une fixation de type anti-rotation.

6. Outil (10) selon l'une des revendications précédentes, **caractérisé en ce que** le joint anti-rotation mutuel entre les extrémités (18) avec l'appendice (19) de la tige (11) et les fentes (16, 17) de la tête (12) est obtenu en utilisant des évidements (20', 20") et des saillies ou goupilles anti-rotation (20) respectives configurées pour empêcher la rotation relative entre la tige (11) et la tête (12) et permettre l'alignement entre les trous radiaux possibles (23) réalisés dans la tête (12) et les trous latéraux disposés radialement (22) placés sur l'appendice (19).

7. Procédé de création d'un outil (10) du type en « T », le procédé comprenant les étapes successives suivantes :
a) créer un corps ou une tige (11) de conformation approximativement cylindrique ou prismatique ayant des dimensions prédéfinies pourvues d'au moins un canal traversant (21) et d'un appendice (19) ;
b) créer une tête (12) séparée dudit corps ou de ladite tige (11), de conformation substantiellement cylindrique ou conique, tronconique ou similaire et d'un diamètre supérieur à celui du corps ou de la tige (11), ladite tête (12) comprenant une première fente (16) substantiellement circulaire, disposée avec son axe principal parallèle à l'axe de rotation de l'outil, à l'intérieur de laquelle une seconde fente (17) est également obtenue, également substantiellement circulaire, concentrique et disposée coaxialement à la fente principale (16), la seconde fente (17) étant de plus petites dimensions que la première fente (16), ladite tête étant pourvue de trous (23) respectifs disposés dans une direction radiale à partir du bord cylindrique (13) de la tête (12) pour s'ouvrir intérieurement au niveau du bord annulaire de la seconde fente (17), ou du bord annulaire de ladite première fente (16) ;
c) placer le matériau de soudage (24) à l'intérieur d'au moins l'une des fentes (16, 17) de la tête (12) ;
d) introduire l'extrémité (18) et l'appendice (19) de la tige (11) dans les fentes (16, 17) de la tête (12) dans lesquelles le matériau de soudage (24) est inséré de sorte que les trous radiaux (23) réalisés dans la tête (12) soient placés en liaison avec ledit canal (21) de la tige (11) ;
e) braser à chaud entre la tige (11) et la tête (12) pour la création du joint ;
**caractérisé en ce qu'**une série de trous latéraux et/ou de rainures (22) disposés radialement sont réalisés sur le corps ou la tige (11) et **en ce que** lesdits trous latéraux et/ou rainures (22) sont placés dans l'alignement des trous radiaux (23) réalisés dans la tête (12) ;
dans lequel l'extrémité (18) de la tige (11) et/ou son appendice (19) sont pourvus de trous latéraux et/ou de rainures (22) disposés radialement et placés en liaison avec les trous radiaux (23) de la tête (12) ;
dans lequel l'extrémité (18) de la tige (11) est fixée à l'intérieur des fentes (16, 17) au moyen d'un matériau de soudage (24) qui est disposé dans les fentes (16, 17) en fonction du positionnement des trous latéraux et/ou des rainures (22) situés à l'extrémité de l'appendice (19) de la tige (11) ou à l'extrémité (18) de la tige elle-même ;
dans lequel, lorsque les trous latéraux (22) de la tige (11) sont placés dans une position avancée sur l'extrémité de l'appendice (19) pour coïncider avec les trous radiaux (23) placés au niveau de la seconde fente (17) de la tête (12), le matériau de soudage (24) est placé sur le fond de la première fente (16) ;
et dans lequel, lorsque les trous latéraux (22) sont placés sur l'extrémité (18) de la tige (11) pour coïncider avec les trous radiaux (23) placés au niveau de la première fente (16), le matériau de soudage est placé sur le fond de la seconde fente (17).

8. Procédé selon la revendication 7, **caractérisé en ce que** ladite tête (12) est soumise à un enlèvement de matière pour créer des arêtes de coupe.
